Europäisches Patentamt

European Patent Office

Office européen des brevets

(11) Publication number:

**0 357 431**
**A2**

## EUROPEAN PATENT APPLICATION

(21) Application number: **89308831.0**

(22) Date of filing: **31.08.89**

(51) Int. Cl.5: **G 06 F 13/14**

(30) Priority: **31.08.88 US 238869**

(43) Date of publication of application:
**07.03.90 Bulletin 90/10**

(84) Designated Contracting States:
**BE DE FR GB IT NL SE**

(71) Applicant: **CODEX CORPORATION**
**20 Cabot Boulevard**
**Mansfield Massachusetts 02048 (US)**

(72) Inventor: **Genovese, Joseph C.**
**11 Grand View Avenue**
**Lexington Massachusetts 02173 (US)**

(74) Representative: **Deans, Michael John Percy et al**
**Lloyd Wise, Tregear & CO. Norman House 105-109 Strand**
**London WC2R OAE (GB)**

(54) Arbitration scheme for resolving access to a shared resource between a plurality of requestors.

(57) A technique is described for arbitrating access to a resource among a number of requestors that share the resource according to a predetermined access priority. Each requestor is assigned an impedance in a voltage divider that comprises a string of interconnected impedances, each impedance being positioned in the voltage divider in accordance with the access priority of the requestor to which it is assigned. Each requestor contends for access to the shared resource by driving one side of its assigned impedance to a predetermined (e.g., ground) potential and detecting the resultant potential present at the other side of the assigned impedance to determine if the requestor has won the arbitration for access to the resource.

FIG.I

## Description

### Arbitration Scheme for Resolving Access to a Shared Resource Between a Plurality of Requestors

This invention relates to arbitrating among a number of requestors, such as printed circuit cards, for access to a shared resource.

In data processing systems that include multiple printed circuit cards, the printed circuit cards are typically plugged into slots in a card cage along with a control circuit card, and all of the cards are interconnected via backplace wire connections among the appropriate connector pins in the slots. The shared resource may be a data processor located on one of the circuit cards or a common data bus.

One known scheme for resolving competing requests by the circuit cards for the shared resource is so-called "daisy-chain" arbitration. The circuit cards each include a switching device, and the switching devices are normally closed and are serially connected together (i.e., "chained") and to a voltage source via the backplane when the cards are plugged into the slots. The priority of each card depends on its relative position in the card cage, and hence in the chain of switching devices, with respect to the other cards. The closer a card is to the beginning of the chain (i.e., the voltage source), the higher the card's priority.

The cards requesting access to the shared resource place a request signal on a common line on the backplane to which an arbiter, usually located on the control card, responds by sending an acknowledge signal to all cards via another common line on the backplane. Upon receipt of the acknowledge signal, the requesting cards open their switching devices (i.e., break the chain) and then analyze the voltage present on the input side of their switching devices. Only one requesting card has the source voltage still applied to its switching device--the requesting card that is located nearest the beginning of the chain--and that card is the winner of the arbitration.

If one or more of the printed circuit cards are removed from the cage, shorting plugs are typically inserted on the backplane pins of the empty slot or slots to maintain the continuity of the chain in the absence of the card or cards. Alternatively, "dummy" cards are plugged into the empty slots for the same purpose. It would also be possible to mount active switching components (e.g., switching transistors) directly on the backplane slots; each switch would close when the corresponding card is removed to maintain continuity for the daisy chain.

In some implementations of daisy-chain arbitration, the arbiter is located in a slot that is part of the switching chain. However, cards located in slots having higher priority than the arbiter's slot cannot bid for the shared resource whose access is controlled by the arbiter.

According to a first aspect of the present invention, there is provided apparatus for arbitrating access to a resource among a plurality of requestors that share the resource, characterised in comprising a voltage divider including a plurality of interconnected impedances, each impedance being assigned to one of said requestors and being positioned in said voltage divider in accordance with a predetermined access priority for said requestor, and arbitration circuitry included in each requestor, and adapted for driving one side of the impedance assigned to said requestor to a predetermined potential when contending for access to the resource and for deteting the resultant potential present at the other side of said assigned impedance to determine if said requestor has won the arbitration for access to said resource.

In a second and alternative aspect thereof, the invention provides a method of arbitrating access to a resource among a plurality of requestors that share the resource according to a predetermined access priority, the method comprising the steps of assigning to each requestor an impedance in a voltage divider that includes a plurality of interconnected impedances, each impedance being positioned in said voltage divider in accordance with the access priority of the requestor to which it is assigned; causing each requestor, when contending for access, to drive one side of the impedance assigned to it to a predetermined potential; and detecting the resultant potential present at the other said of said assigned impedances to determine which of said requestors has won the arbitration for access to said resource.

Preferred embodiments include the following features.

The requestors are adapted to be selectively coupled to and decoupled from their assigned impedances such that the decoupling of any given requestor from its assigned impedance does not interfere with the arbitration among other requestors that are coupled to their assigned impedances and are contending for access to the shared resource. Preferably, each requestor is assigned a slot in a mounting assembly and is adapted to be removably disposed in the assigned slot, and each impedance is mounted on the mounting assembly and positioned at the slot assigned to the requestor to which the impedance is assigned; a given requestor is thus coupled to its assigned impedance when the requestor is disposed in the slot and decoupled from the impedacne when the requestor is removed from the slot. Accordingly, any given requestor can be removed from its slot without interfering with the arbitration between other requestors that are disposed in their slots and are contending for access to the shared resource. In some embodiments, the shared resource is also disposed in the mounting assembly, in others, not. The requestors are circuit cards, and a backplane included in the mounting assembly interconnects the circuit cards via the slots and includes the voltage divider impedances.

An arbiter controls access to the shared resource in accordance with the arbitration, with each requestor notifying the arbiter when contending for access to the resource. The arbiter causes each contending requestor to drive the one side of its assigned impedance to the predetermined potential and detect the resultant potential at the other side of the assigned impedance. The resultant potential is compared to a reference potential, and the contending requestor for which the the resultant potential exceeds the reference potential wins the arbitration. In some embodiments, the arbiter is included in one of the requestors; in others, the arbiter is disposed on a separate control device (e.g., a control circuit card). The voltage divider is arranged so that the arbiter operates in the same way with respect to the requestors' arbitration circuitry independently of the slot in which the arbiter is disposed.

The voltage divider impedances can take various forms, such as discrete resistors or diodes.

The invention provides a simple arbitration scheme that readily accommodates changes in system configuration (e.g., the removal of one or more circuit cards from the backplane) without requiring manual intervention (such as inserting shorting plugs or dummy cards) to enable subsequent arbitrations to be performed. Also, because a passive voltage divider is the priority ranker, cards can be inserted and removed with the system powered and running without interfering with the operation of the arbitration mechanism. Also, the card containing the arbiter can be in any slot without restricting the number or location of cards that can contend for access to the shared resource, and neither the arbiter nor the backplane requires information about the system configuration.

The arbitration technique can also be extended to resolve competing requests for additional shared resources by placing additional voltage dividers in the backplane. Each requestor would be assigned an impedance in a voltage divider for each shared resoure to which the requestor requires access.

Other features and advantages of the invention will be apparent from the following description of the preferred embodiment.

We first briefly describe the drawings.

Fig. 1 is a schematic and block diagram of a system for carrying out the arbitration scheme of the invention.

Fig. 2 is a wiring diagram for the system of Fig. 1.

Fig. 3 are waveforms useful in understanding the operation of the system of Fig. 1.

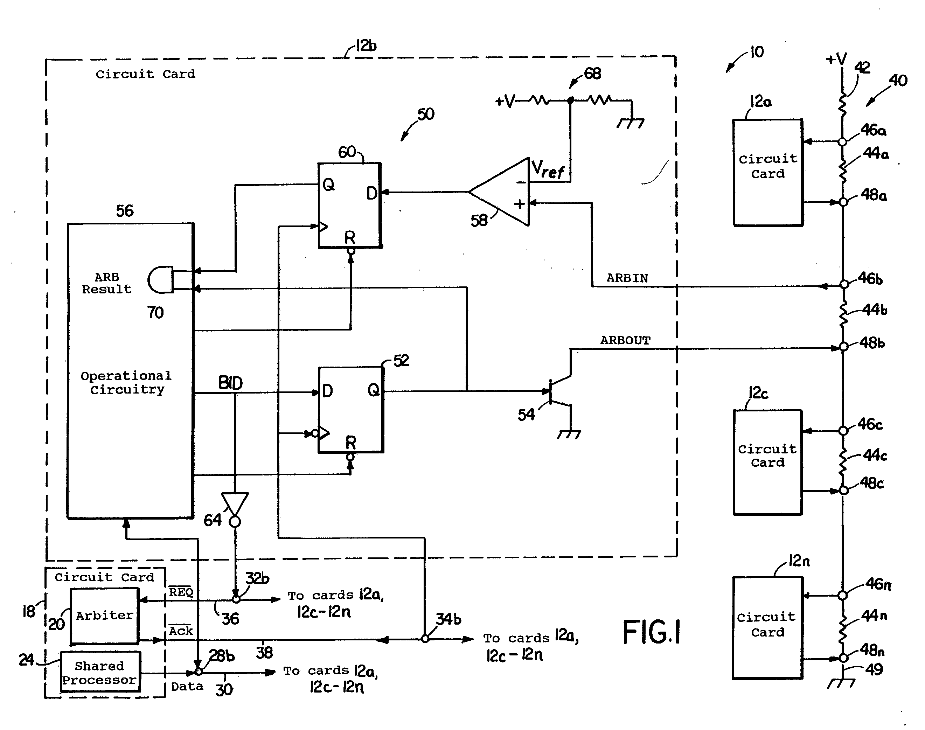

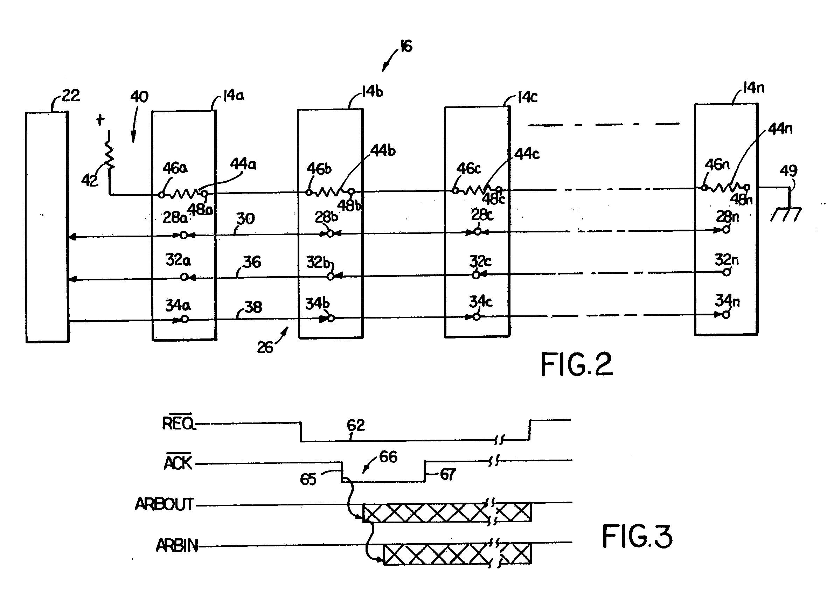

Referring to Figs. 1 and 2, a data processing system 10 includes a plurality of circuit cards 12a-12n, 18 disposed in corresponding slots 14a-14n, 22 of a card cage 16. Circuit card 18 includes arbiter 20 which arbitrates among competing requests made by circuit cards 12a-12n for access to a resource (such as processor 24 on card 18) shared by cards 12a-12n in a manner described in detail below.

Slots 14a-14n, 22 are identical, and each includes a number of pins that are selectively interconnected via backplane wiring 26. For example, slots 14a-14n include pins 28a-28n that are interconected via a data line 30 and applied to shared processor 24. Slots 14a-14n also include pins 32a-32n, 34a-34n, respectively, that are connected via REQ line 36 and ACK line 38, respectively, to arbiter 20.

Backplane 26 also includes voltage divider 40 that includes a plurality of serially interconnected impedances used to assign priority ranking to circuit cards 12a-12n in their competition for access to shared processor 24. Voltage divider 40 includes a source impedance 42 (e.g., a resistor) interconnected with a plurality of divider impedances (e.g., resistors) 44a-44n. A reference voltage ($+V$) is applied to source resistor 42, and divider resistor 44n is connected to ground 49. Resistors 44a-44n are mounted between a pair of pins 46a, 48a - 46n, 48n in respective slots 14a-14n, and are thus assigned to circuit cards 12a-12n, respetively.

Of course, the actual wiring of backplane 26 is typically much more complex than that shown in Fig. 2. The backplane interconnections that are unrelated to the invention are omitted for clarity.

Each circuit card (for example, circuit card 12b) includes arbitration circuitry 50 that interfaces with the voltage divider resistor assigned to it (i.e., resistor 44b) via the terminals of the resistor (i.e., pins 46b, 48b). Arbitration circuitry 50 includes latch 52 and switching transistor 54 for driving the "low" side of resistor 44b (i.e., the end of the resistor closest to ground connection 49) to ground potential when operational circuitry 56 contends for access to shared processor 24. Some time later, the voltage on the "high" side of resistor 44b (i.e., the end of the resistor closest to $+V$) is compared with a reference potential ($V_{ref}$) by comparator 58 and the result stored in latch 60. Operational circuitry 56 determines whether circuit card 12b has requested and gained access to shared processor 24 based on the stored outputs of latches 52, 60.

Referring also to Fig. 3, in operation, when the operational circuitry 56 in a circuit card determines that access to shared processor 24 is needed, circuitry 56 asserts a BID signal, which is inverted to an asserted $\overline{REQ}$ (REQUEST) SIGNAL 62 by inverter 64 (e.g., an open-collector device) and applied to arbiter 20 via line 36. Because more than one circuit card may request access to shared processor 24 at approximately the same time, more than one request pin 32a-32n on backplane 26 may simultaneously be driven low. For example, if circuit cards 12b and 12c simultaneously request access to shared processor 24, both cards would assert their BID and $\overline{REQ}$ signals at about the same time.

Arbiter 20 responds to the asserted $\overline{REQ}$ on line 36 by producing an acknowledge ($\overline{ACK}$) pulse 66 on line 38. At the falling edge 65 of $\overline{ACK}$ pulse 66, the arbitration circuitry 50 in circuit cards 12a-12n latches the logic states of their BID signals into latches 52. Thus, latches 52 in requesting cards 12b, 12c each contain a logic "1", while a logic "0" is held in latches 52 in nonrequesting cards 12a, 12d-12n. Accordingly, switching transistors 54 in cards 12b, 12c are driven into conduction, coupling the outputs of the transistors (ARBOUT) to approximately ground potential and thereby driving pins 48b and 48c to ground as well. Transistors 54 in nonrequesting cards 12a, 12d-12n remain nonconducting in response to the logic 0 output of their latches 52, and thus present a high impedance between the "low" side of resistors 44a, 44d-44n and ground potential. Because pin 48b is driven to ground, the resultant potential on pins 46c-46n (and 48c-48n) in downstream slots 14c-14n is approximately zero volts. On the other hand, because voltage divider 40 is effectively terminated at pin 48b (i.e., the voltage divider effectively includes only resistors 42, 44a, and 44b), the potential at pin 46b is substantially higher than zero volts.

During the pendency of $\overline{ACK}$ pulse 66, comparators 58 in all circuit cards 12a-12n compare the potentials (ARBIN) present at respective pins 46a-46n with a reference voltage ($V_{ref}$) derived from voltage divider 68. Each comparator 58 produces a logic "1" output only if the applied ARBIN exceeds $V_{ref}$. Thus, the outputs of comparators 58 in requesting circuit card 12b and in all circuit cards between card 12b and source potential +V (e.g., nonrequesting circuit card 12a) are all logic "1"s. By contrast, comparators 58 in all other circuit cards (including requesting circuit card 12c) produce logic "0" outputs. The level of $V_{ref}$ is the same for all circuit cards 12a-12n and is selected to be sufficiently low (yet above ground potential) so that, if card 12n was the only card requesting access to processor 24, its ARBIN level would exceed $V_{ref}$.

The duration of $\overline{ACK}$ pulse 66 is selected to be sufficiently long so that the levels of ARBOUT and ARBIN and the outputs of comparators 58 in all circuit cards 12n-12n have sufficient time to settle. This time is the same for all cards (e.g., 250 nsec.) and is not a function of the number of slots 14a-14n or the number of requestors. Upon the rising edge 67 of $\overline{ACK}$ pulse 66, the outputs of comparators 58 in circuit cards 12a-12n are stored in respective latches 60. Thus, latches 60 in circuit cards 12a (a nonrequesting card) and 12b each store a logic "1" while the latches 60 in requesting card 12c and all other cards 12d-12n store logic "0"s.

The outputs of latches 52, 60 in each card 12a-12n are logically ANDed, e.g., by gate 70 in the card's operational circuitry 56 to produce a signal (ARB RESULT) having a logic state that indicates whether the card has requested and obtained access to shared processor 24. Because the output of latch 52 is asserted only in requesting cards (i.e., cards 12b, 12c) and the output of latch 60 is asserted only in cards having an applied ARBIN signal greater than $V_{ref}$, the requesting card located at the "highest point" in voltage divider 40 (i.e., closest to source voltage +V) is guaranteed to win the arbitration. Thus, in the present example, circuit card 12b wins the arbitration for access to shared processor 24 over circuit card 12c.

It is therefore apparent that cards 12a-12n are assigned priority in arbitrating for access to shared processor 24 based on the relative location in voltage divider 40 of their assigned impedances, and hence on the cards' positions in card cage 16. The card in slot 14a has the highest priority, because no divider resistors in voltage divider 40 are located between the divider resistor assigned to it (i.e., resistor 44a) and the voltage source (+V). Thus, card 12a will never lose an arbitration for access to shared processor 24 with any other circuit card 12b-12n. On the other hand, the card in slot 14n (i.e., card 12n) has the lowest overall priority, because all divider resistors in voltage divider 40 are located between the divider resistor assigned to it (i.e., resistor 44n) and the voltage source. Card 12n will therefore always lose an arbitration with another card for access to shared processor 24.

Because voltage divider 40 is fixed to card cage 16, the operation and performance of the arbitration is insensitive to the removal of one or more of circuit cards 12a-12n. No shorting plugs or dummy cards need be added when one or more of circuit cards 12a-12n are removed, and thus changing circuit card configurations in card cage 16 are easily accommodated. Further, because the components mounted on the card cage slots are passive resistors, the arbitration mechanism is insensitive to the removal and insertion of cards while the system is powered and running.

The arbitration circuits 50 in cards 12a-12n are reset after the winning requester (e.g., circuit card 12b) has finished using shared processor 24. For example, shared processor 24 informs arbiter 20 that the winning requestor is finished, and arbiter 20 then initiates a reset sequence and so notifies the operational circuitry 56 in cards 12a-12n via paths (not shown) in backplane 26. Flip flops 52, 60 are then reset by operational circuitry 56, thereby reinitializing arbitration circuitry 50 in cards 12a-12n for the next arbitration cycle.

Other embodiments are feasible.

For example, arbitration may be for other types of shared resources, such as data bus 30, or for resources not disposed in the mounting assembly. Further, arbitration may be provided for more than one shared resource simply by including a voltage divider in the backplane for each resource to be shared and placing a number of arbitration circuits in each circuit card corresponding to the number of resources accessible by that card. Cards that do not share a particular resource need not include an arbitration circuit for the resource. However, their slots should include a resistor in the voltage divider corresponding to the resource so that all slots in mounting assembly 16 are identically configured. Further, arbiter 20 need not be located in slot 22 (or on card 18), but may instead be in any slot 14a-14n (i.e., on any circuit card) without interfering with the arbitration process of any card in any slot.

Also, components other than discrete impedances can be used to implement voltage divider 40. For example, resistors 42, 44a-44n may be replaced by diodes biased by supply voltage +V. Alternatively, a continuous resistive wire could be used.

## Claims

1. Apparatus for arbitrating access to a resource among a plurality of requests that share the resource, characterised in comprising a voltage divider including a plurality of interconnected impedances, each impedance being assigned to one of said requestors and being positioned in said voltage divider in accordance with a predetermined access priority for said requestor, and arbitration circuitry included in each requestor and adapted for driving one side of the impedance assigned to said requestor to a predetermined potential when contending for access to the resource and for detecting the resultant potential present at the other side of said assigned impedance to determine if said requestor has won the arbitration for access to said resource.

2. Apparatus according to Claim 1, further characterised in that said requestors are adapted to be selectively coupled to and decoupled from their assigned impedances in said voltage divider such that the decoupling of any given requestor from its assigned impedance does not interfere with the arbitration between other requestors that are coupled to their assigned impedances and are contending for access to said shared resource.

3. Apparatus according to Claims 1 or 2, further characterised in that it further comprises a mounting assembly having a plurality of slots, each said requestor being assigned a slot and being adapted to be removably disposed in said assigned slot; in that each one of said impedances of said voltage divider is mounted on said mounting assembly and positioned at the slot assigned to the request or to which said impedance is assigned; and in that each requestor is adapted to be coupled to its assigned impedance when said requestor is disposed in said assigned slot and decoupled from said impedance when said requestor is removed from said assigned slot.

4. Apparatus according to Claim 3, further characterised in that said shared resoure is disposed in said mounting assembly.

5. Apparatus according to Claims 3 or 4, further characterised in that said requestors are circuit cards and said mounting assembly comprises a backplane for interconnecting said circuit cards via said slots, said backplane including said voltage divider impedances.

6. Apparatus according to any preceding claim, further characterised in that it comprises an arbiter adapted for controlling access to said shared resource in accordance with the arbitration, each requestor including circuitry adapted to notify said arbiter when contending for access to said shared resource, and said arbiter being adapted to cause the arbitration circuitry of each contending requestor to couple said one side of said assigned impedance to ground potential and to detect the resultant potential at said other side of said assigned impedance.

7. Apparatus according to Claim 6, further characterised in that said arbiter is included in one of said requestors.

8. Apparatus according to both Claims 3 and 6, further characterised in that said arbiter is disposed in a said slot and in that said voltage divider is arranged so that said arbiter operates in the same way with respect to the arbitration circuitry of each requestor independently of the slot in which the arbiter is disposed.

9. Apparatus according to any preceding claim, further characterised in that said arbitration circuitry further includes circuitry adapted for comparing said resultant potential to a reference potential, the contending requestor for which said resultant potential exceeds said reference potential winning the arbitration.

10. Apparatus according to any preceding claim, further characterised in that said interconnected impedances are resistance elements.

11. Apparatus according to any of Claims 1 to 9, further characterised in that said interconnected impedances are diodes.

12. A method of arbitrating access to a resource among a plurality of requestors that share the resource according to a predetermined access priority, the method comprising the steps of assigning to each requestor an impedance in a voltage divider that includes a plurality of interconnected impedances, each impedance being positioned in said voltage divider in accordance with the access priority of the requestor to which it is assigned; causing each requestor, when contending for access, to drive one side of the impedance assigned to it to a predetermined potential; and detecting the resultant potential present at the other side of said assigned impedances to determine which of said requestors has won the arbitration for access to said resource.

FIG.1

EP 0 357 431 A2

FIG.2

FIG.3